# EUROPEAN PATENT APPLICATION

(11) **EP 4 475 139 A1**
(43) Date of publication of application: **11.12.2024**
(21) Application number: 23749909.0
(22) Date of filing: 05.01.2023
(51) Int. Cl.: G21C 15/06, G21C 1/32

(54) **NUCLEAR POWER PLANT INCLUDING SMALL MODULAR REACTOR (SMR) DISPOSED IN COOLING WATER TANK AND MAINTENANCE METHOD THEREOF**

(30) Priority: 04.02.2022 KR 20220014834
(71) Applicant: Korea Hydro & Nuclear Power Co., Ltd, Gyeongju-si, Gyeongsangbuk-do 38120 (KR)
(72) Inventor: NAM, Hyun Suk, Sejong 30127 (KR); MOON, Jong Seol, Sejong 30147 (KR); CHOI, Sun Mi, Daejeon 34070 (KR)
(74) Representative: Habermann, Hruschka & Schnabel
(86) International application number: PCT/KR2023/000213
(87) International publication number: WO 2023/149674

(57) **Abstract**

The present invention relates to a nuclear power plant which includes a small modular reactor (SMR), the nuclear power plant comprising a water tank, wherein the water tank comprises: a first water tank filled with cooling water and forming a first space in which spent nuclear fuel is disposed; and a second water tank forming a second space which is separated from the first space and in which the small modular reactor (SMR) is disposed.

## Description

### Technical Field

The disclosure relates to a nuclear power plant with small modular reactors (SMR) placed in a cooling pool, and a maintenance method thereof.

### Background Art

In a general large nuclear power plant, a cooling pool is used to store spent fuel and remove decay heat generated from the stored spent fuel.

A small modular reactor (SMR) based nuclear power plant includes multiple small modular reactors (SMR), and each small modular reactor (SMR) is operated in the state of being submerged in the cooling pool to improve the safety. In this case, the cooling pool is used as a primary ultimate heat sink (UHS).

The cooling pool, i.e., the primary ultimate heat sink serves to cool the reactor for more than one month in a reactor accident, but has a problem that only natural circulation is used to cool the reactor in the state that the output is low after one month.

Further, for the maintenance of the small modular reactor placed in a conventional cooling pool, it is required to move the small modular reactor from the inside of the cooling pool to a separate space because the maintenance is not possible inside the pool, thereby causing a problem that the main systems should be separated.

### Disclosure

### Technical Problem

Accordingly, an aspect of the disclosure is to provide a nuclear power plant with small modular reactors (SMR) placed in a cooling pool, and a maintenance method thereof.

### Technical Solution

According to an embodiment of the disclosure, a nuclear power plant with small modular reactors (SMR) includes: a pool, the pool including: a first pool filled with cooling water, and forming a first space where spent nuclear fuel is placed; and a second pool forming a second space divided from the first space and placing the small modular reactor therein.

The pool may further include: a first door that divides the first space from the second space and is opened and closed; and a second door that divides the second space from a third space, which is an external space of the pool, and is opened and closed.

The second space may include a plurality of second spaces, and the second spaces may be arranged being spaced apart along a circumference of the first space, and the first space may have either a circular or elliptical shape.

The nuclear power plant may further include: a cover located in an upper portion of the pool, and forms the pool to have a closed structure; and a condenser at least partially located between the pool and the cover, and collecting and condensing the cooling water evaporated from the pool.

The nuclear power plant may further include a cooling water controller that controls the cooling water to be supplied to and discharged from the second space.

The nuclear power plant may further include a crane installed outside the pool, wherein equipment necessary for maintenance of the small modular reactor is introduced into the second space by the crane.

According to an embodiment of the disclosure, there is provided a maintenance method of a nuclear power plant with small modular reactors (SMR), which includes a pool, the pool including a first pool filled with cooling water, and forming a first space where spent nuclear fuel is placed; a second pool forming a second space divided from the first space and placing the small modular reactor therein; a first door that divides the first space from the second space and is opened and closed; and a second door that divides the second space from a third space, which is an external space of the pool, and is opened and closed.

The maintenance method including the steps of: closing the first door to divide the first space from the second space; discharge the cooling water from the second space; opening the second door and introducing equipment necessary for maintenance of the small modular reactor from the outside of the pool into the second space; performing the maintenance of the small modular reactor by the equipment; and closing the second door, and replenishing the second space with the cooling water.

The cooling water may be discharged by a cooling water controller that controls the cooling water to be supplied to and discharged from the second space.

The equipment may be introduced by the crane installed outside the pool.

The replenishment of the cooling water may be performed with either the cooling water supplied from the first space opened, or the cooling water supplied by the cooling water controller.

### Advantageous Effects

According to the disclosure, there are provided a nuclear power plant with small modular reactors (SMR) placed in a cooling pool, and a maintenance method thereof.

### Description of Drawings

FIG. 1 is a plan view of a nuclear power plant with small modular reactors (SMR) according to an embodiment of the disclosure,
FIG. 2 is a font view of a nuclear power plant with SMR according to an embodiment of the disclosure,
FIG. 3 is a flowchart of a maintenance method for a nuclear power plant with SMR according to an embodiment of the disclosure, and
FIGS. 4A to 4D illustrate operations of a door, cooling water, and equipment in the steps of a maintenance method for a nuclear power plant with SMR according to an embodiment of the disclosure.

### Mode for Invention

Below, the disclosure will be described in more detail with reference to the accompanying drawings.

The accompanying drawings are merely an example illustrated to describe the technical concept of the disclosure in more detail, and thus the technical concept of the disclosure is not limited to the accompanying drawings. Further, the size and spacing of elements in the accompanying drawings may be exaggerated compared to reality so as to describe relationships between the elements.

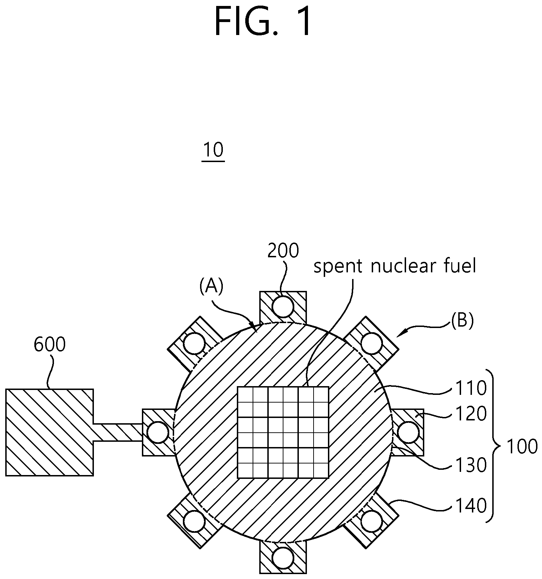

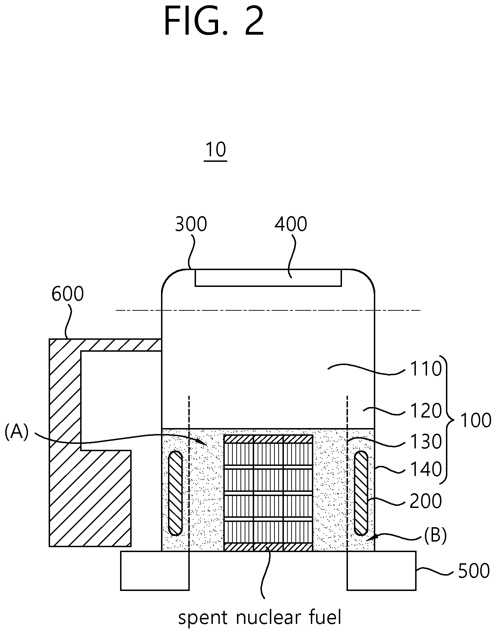

Referring to FIGS. 1 and 2, a nuclear power plant with small modular reactors (SMR) according to an embodiment of the disclosure will be described.

FIG. 1 is a plan view of a nuclear power plant with small modular reactors (SMR) according to an embodiment of the disclosure, and FIG. 2 is a font view of a nuclear power plant with small modular reactors (SMR) according to an embodiment of the disclosure.

A nuclear power plant 10 with small modular reactors includes a pool 100, a small modular reactor 200, a cover 300, a condenser 400, a cooling water controller 500, and a crane 600.

The pool 100 may include a first pool 110, a second pool 120, a first door 130, and a second door 140.

The first pool 110 is formed with a first space (A), inside which spent nuclear fuel is located, and is filled with cooling water so that the spent nuclear fuel can be sufficiently submerged therein.

In this embodiment, the first space (A) has a circular shape, but is not limited thereto and may be variously modified to have an elliptical shape, a polygonal shape, etc. According to the disclosure, the shape refers to a cross-section in a horizontal direction

Although not shown, a cooling water replenishing device may be additionally provided to prevent the cooling water from being lost from the first space (A) in an accident of the small modular reactor. Further, an additional supporting structure may be provided to secure and support the spent nuclear fuel located inside the first pool 110.

The second pool 120 is formed with a second space (B), the second space (B) comprises a plurality of second spaces (B) which are arranged being spaced apart along the circumference of the first space (A).

Referring to FIG. 1, the nuclear power plant 10 with small modular reactors (SMR) is illustrated in the form of a gear wheel, in which the second spaces (B) are arranged at regular intervals along the circumference of the first space (A), but is not limited thereto. According to an alternative embodiment, the shape of the second space (B) may be variously modified, and the arrangement thereof may also be modified.

The small modular reactors 200 are placed inside the second pools 120 arranged at regular intervals, respectively, and the second pool 120 is filled with the cooling water so that the small modular reactors 200 can be sufficiently submerged therein.

Although not shown, a supporting structure may be additionally provided to secure and support each small modular reactor 200 located inside the second space (B).

The first door 130 divides the first space (A) from the second space (B), and is opened and closed. By closing the first door 130, the cooling water in the first pool 110 and the cooling water in the second pool 120 are divided independently of each other.

The second door 140 divide the second space (B) from a third space (C), i.e., an external space of the pool 100, and is opened and closed. When the cooling water is removed from the second space (B) and the second door 140 is opened, equipment for the maintenance of the small modular reactor 200 is allowed to move to the second space (B).

According to the disclosure, the first door 130 and the second door 140 may be formed as a floodgate or the partition wall, but are not limited thereto.

The cover 300 is located on the top of the pool 100, and forms the pool 100 to have a closed structure.

The material of the cover 300 may include, but not limited to, concrete.

One end of the cover 300 and one end of the second door 140 are coupled, and an additional supporting structure (not shown) may be further provided to secure and support the second door 140 to be coupled to the cover 300.

The condenser 400 is at least partially located between the pool 100 and the cover 300 and collects and condenses the cooling water evaporated from the pool 100.

The cooling water condensed by the condenser 400 falls into the pool 100, thereby replenishing the amount of cooling water in the pool 100 of which the water level has decreased due to the evaporation of the cooling water. Thus, the spent nuclear fuel and the small modular reactor 200 are sufficiently submerged in the cooling water.

The condenser 400 may include, but not limited to, a heat exchanger or the like.

Although not shown, the condenser 400 is further provided with separate cooling water piping facilities connected from the outside of the pool 100, so that the cooling water evaporated from the pool 100 can be condensed.

The cooling water controller 500 controls the cooling water to be supplied to and discharged from the second space (B) of the second pool 120.

The cooling water controller 500 may include, but not limited to, a pump, etc.

To supply the cooling water by the cooling water controller 500, the cooling water discharged from the second pool 120 may be used, or cooling water obtained from an external cooling water feeder (or cooling water storage tank, which is not shown) of the nuclear power plant may be used.

Referring to FIG. 2, the cooling water controller 500 is placed below the external space of the pool 100, but is not limited thereto.

The crane 600 is installed outside the pool 100, and may move equipment necessary for the maintenance of the small modular reactor 200 to the second space (B).

The crane 600 may include, but not limited to, a movable or stationary crane.

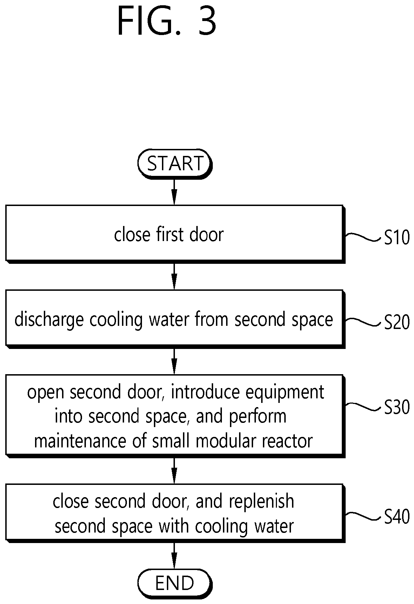

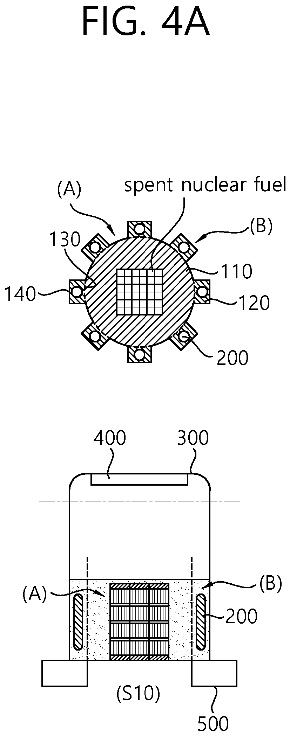

A maintenance method of a nuclear power plant with small modular reactors (SMR) according to an embodiment of the disclosure and operations in each step will be described with reference to FIG. 3 and FIGS. 4A to d.

FIG. 3 is a flowchart of a maintenance method for a nuclear power plant with small modular reactors (SMR) according to an embodiment of the disclosure, and FIGS. 4A to 4D illustrate operations of a door, cooling water, and equipment in the steps of a maintenance method for a nuclear power plant with small modular reactors (SMR) according to an embodiment of the disclosure.

According to the disclosure, the maintenance refers to maintenance related to the small modular reactors 200 in the nuclear power plant, and specifically means maintenance of modules in the small modular reactor 200, processing of spent nuclear fuel discharged from the small modular reactor 200, and movement of the small modular reactor 200.

For the maintenance of the nuclear power plant according to the disclosure, the maintenance may be selectively applied to the small modular reactor 200, which actually requires the maintenance, among the small modular reactors 200 respectively placed in the plurality of second spaces (B).

As shown in FIGS. 3 and 4A, the first door 130 is first closed to divide the first space (A) from the second space (B) (S10).

By closing the first door 130, the first space (A) and the second space (B) are completely divided independently of each other, so that the cooling water in the second space (B) can be supplied and discharged independently of the cooling water in the first space (A).

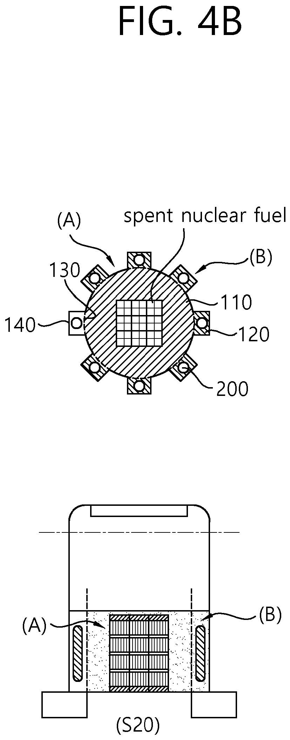

Then, the cooling water is discharged from the second space (B) as shown in FIG. 4B (S20).

In this case, the cooling water is discharged from the second space (B) to the outside of the pool 100 by the cooling water controller 500 that controls the cooling water to discharged to the first pool 110 through the first door 130 opened or controls the cooling water to be supplied to and discharged from the second space (B).

By the cooling water controller 500, the cooling water may be selectively discharged from the second space (B), in which the small modular reactor 200 that actually requires the maintenance is placed, among the plurality of second spaces (B).

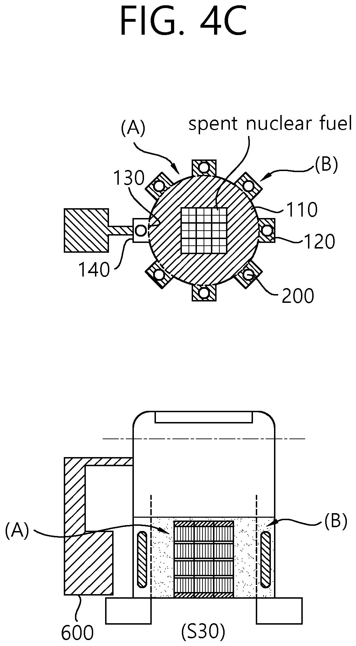

Referring to FIGS. 3 and 4C, the second door 140 is opened after discharging the cooling water, and the equipment necessary for the maintenance of the small modular reactor 200 is introduced from the outside of the pool 100 into the second space (B), thereby using the introduced equipment to perform the maintenance of the small modular reactor 200 (S30).

The crane 600 installed outside the pool 100 may be used to not only introduce the equipment necessary for the maintenance of the small modular reactor 200 but also put separate workers (not shown) for repairing or replacing the small modular reactor 200 into the second space (B).

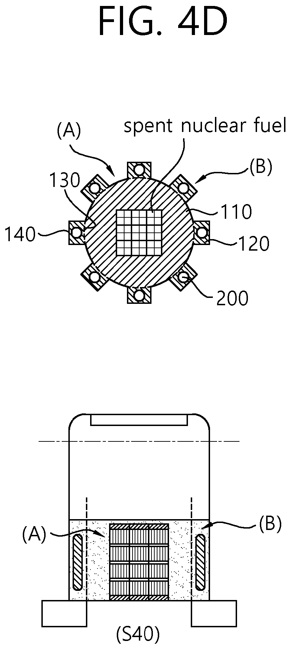

Then, as shown in FIG. 4D, the second door 140 is closed, and the second space (B) is replenished with the cooling water (S40).

The replenishment of the cooling water is achieved by the cooling water supplied from the first space (A) through the first door 130 opened, or the cooling water supplied from the outside of the pool 100 by the cooling water controller 500.

In the foregoing nuclear power plant with the small modular reactors according to the disclosure and the maintenance method thereof, the cooling performance of the pool is improved by the condenser, the movement of the reactor for the maintenance is minimized by dividing the space within the pool (into the first space and the second space), and the overall safety of the nuclear power plant is enhanced by maintaining the shape of the pool having a closed structure to form a separate pressure boundary.

The aforementioned embodiments are merely examples for describing the disclosure, and the disclosure is not limited thereto. Various modifications from these embodiments can be made by a person, who has ordinary knowledge in the art to which the disclosure pertains, to implement the disclosure, and thus the technical scope of the disclosure should be defined by the appended claims.

## Claims

1. A nuclear power plant with small modular reactors (SMR), comprising:
a pool,
the pool comprising:
a first pool filled with cooling water, and forming a first space where spent nuclear fuel is placed; and
a second pool forming a second space divided from the first space and placing the small modular reactor therein.

2. The nuclear power plant of claim 1, wherein
the pool further comprises:
a first door that divides the first space from the second space and is opened and closed; and
a second door that divides the second space from a third space, which is an external space of the pool, and is opened and closed.

3. The nuclear power plant of claim 1, wherein
the second space comprises a plurality of second spaces, and
the second spaces are arranged being spaced apart along a circumference of the first space, and
the first space has either a circular or elliptical shape.

4. The nuclear power plant of claim 1, further comprising:
a cover located in an upper portion of the pool, and forms the pool to have a closed structure; and
a condenser at least partially located between the pool and the cover, and collecting and condensing the cooling water evaporated from the pool.

5. The nuclear power plant of claim 1, further comprising a cooling water controller that controls the cooling water to be supplied to and discharged from the second space.

6. The nuclear power plant of claim 1, further comprising a crane installed outside the pool,
wherein equipment necessary for maintenance of the small modular reactor is introduced into the second space by the crane.

7. A maintenance method of a nuclear power plant with small modular reactors (SMR), which comprises a pool, the pool comprising a first pool filled with cooling water, and forming a first space where spent nuclear fuel is placed; a second pool forming a second space divided from the first space and placing the small modular reactor therein; a first door that divides the first space from the second space and is opened and closed; and a second door that divides the second space from a third space, which is an external space of the pool, and is opened and closed, the method comprising:
closing the first door to divide the first space from the second space;
discharge the cooling water from the second space;
opening the second door and introducing equipment necessary for maintenance of the small modular reactor from the outside of the pool into the second space;
performing the maintenance of the small modular reactor by the equipment; and
closing the second door, and replenishing the second space with the cooling water.

8. The maintenance method of claim 7, wherein the cooling water is discharged by a cooling water controller that controls the cooling water to be supplied to and discharged from the second space.

9. The maintenance method of claim 7, wherein the equipment is introduced by the crane installed outside the pool.

10. The maintenance method of claim 8, wherein the replenishment of the cooling water is performed with either the cooling water supplied from the first space opened, or the cooling water supplied by the cooling water controller.
